# EUROPEAN PATENT SPECIFICATION

(11) **EP 4 406 637 B1**
(45) Date of publication and mention of the grant of the patent: **21.10.2026**
(21) Application number: 22872545.3
(22) Date of filing: 26.07.2022
(51) Int. Cl.: B01D 36/00, B01D 29/66, B01D 35/157

(54) **FILTRATION DEVICE**
FILTERVORRICHTUNG
DISPOSITIF DE FILTRATION

(30) Priority: 21.09.2021 JP 2021152871
(43) Date of publication of application: 31.07.2024
(73) Proprietor: Kanagawa Kiki Kogyo Co., Ltd., Yokohama-shi Kanagawa 235-0021 (JP)
(72) Inventor: KUMAZAWA, Yoshimasa, Yokohama-shi Kanagawa 235-0021 (JP); YAMADA, Norio, Yokohama-shi Kanagawa 235-0021 (JP)
(74) Representative: Betten & Resch
(86) International application number: PCT/JP2022/028677
(87) International publication number: WO 2023/047789

(56) References cited:
- WO-A1-2018/002822
- JP-A- 2019 063 762
- JP-A- 2019 063 762
- JP-A- H06 313 504
- JP-B2- 4 225 997
- JP-B2- 4 225 997

## Description

### Technical Field

The present invention relates to a filtration device, and relates to, for example, a filtration device that filters liquid such as lubricant supplied to an instrument in a marine vessel.

### Background Art

Conventionally, a filtration device has been known that filters lubricant and the like supplied by an instrument in a marine vessel. For example, Patent Document 1 discloses a filtration device that filters lubricant and the like supplied by an instrument in a marine vessel. The filtration device is configured to include a main filter of a backwash type and a sub-filter. During a normal filtering operation, in the filtration device, the main filter filters the lubricant, and at the same time the sub-filter filters liquid (backwash oil) discharged as a result of backwash of the main filter. Now, the configuration of the filtration device described in Patent Document JP4225997B2 will be briefly described with reference to FIG. 5.

As illustrated in the figure, a filtration device W3 includes a pump 3 that pumps lubricant 2 stored in a storage tank 1, a main filter A of a backwash type, and a sub-filter B installed in parallel to the main filter A.

The filtration device W3 includes a pipe 40 connecting the storage tank 1 and the pump 3 to each other, a pipe 41, having one end portion connected to the pump 3, through which the lubricant 2 pumped by the pump 3 flows out from the pump 3, a pipe (first pipe) 42 through which the lubricant 2 pumped by the pump 3 flows into the main filter A and the filtered lubricant 2 flows out from the main filter A, and a pipe (second pipe) 43 through which the lubricant 2 pumped by the pump 3 flows into the sub-filter B and flows out from the sub-filter B.

The pipe 41 has one end portion connected to the pump 3, and has an intermediate part branched into two paths (pipes). One of the two paths (pipes) is connected to one end portion of the pipe 42 and the other one of the two paths is connected to one end portion of the pipe 43.

The other end portion of the pipe 42 and the other end portion of the pipe 43 are coupled to each other (joined), and a pipe (instrument connection pipe) 44 connected to an instrument 6 is connected to the joined portion. The instrument 6 and the storage tank 1 are connected to each other through a pipe (discharging pipe) 45.

The pipe (first pipe) 42 described above to which the main filter A is connected is provided with a first valve (opening-closing valve) 51 that controls flow-in and flow-in stop of the lubricant 2 to the main filter A, and a fourth valve (opening-closing valve) 52 that controls flow-out and flow-out stop of the lubricant 2 (filtered lubricant 2) from the main filter A.

The pipe (second pipe) 43 described above to which the sub-filter B is connected is provided with a second valve (opening-closing valve) 53 that controls flow-in and flow-in stop of the lubricant 2 to the sub-filter B, and a third valve (opening-closing valve) 54 that controls flow-out and flow-out stop of the lubricant 2 (filtered lubricant 2) from the sub-filter B.

The filtration device W3 is further provided with a pipe (third pipe) 47 through which backwash liquid (lubricant 2) flowed out from the main filter A flows into a portion (43a1) in the pipe 43 located between the second valve 53 and the sub-filter B. The filtration device W3 is also provided with a pipe 48 through which the lubricant 2 filtered by the sub-filter B is discharged to the storage tank 1 from a pipe 43b (43) located between the sub-filter B and the third valve 54. The pipe 48 is provided with a fifth valve (opening-closing valve) 55 that controls flow-out and flow-out stop of the lubricant 2 (filtered lubricant 2) from the sub-filter B.

The filtration device W3 opens the first valve 51, the fourth valve 52, and the fifth valve 55, and closes the second valve 53 and the third valve 54 during the normal filtration operation. As a result, the lubricant 2 pumped from the storage tank 1 flows into the main filter A to be filtered by the main filter A and then flows out. At the same time, the backwash liquid (lubricant 2) from the main filter A flows into the sub-filter B to be filtered by the sub-filter B. The lubricant 2 flowed out from the main filter A after the filtering flows from the pipe 42 to the pipe 44 to be supplied to the instrument 6. The backwash liquid (lubricant 2) filtered by the sub-filter B flows into the storage tank 1 through the pipe 48. The lubricant 2 after the use in the instrument 6 flows into the storage tank 1 through the pipe 45.

The filtration device W3 described above is used with the second valve 53 and the third valve 54 opened and with the first valve 51, the fourth valve 52, and the fifth valve 55 closed, during a filtration operation without using the main filter A. Such an operation is performed in cases where an emergency occurs in the main filter A, where the main filter A is washed, where lubricant flushing is performed at the time of initial operation of the instrument 6, and the like. In such cases, the lubricant 2 pumped from the storage tank 1 flows into the sub-filter B, is filtered by the sub-filter B, and then flows out, to then flow from the pipe 43 to the pipe 44 to be supplied to the instrument 6. Also in this case, the lubricant 2 after the use in the instrument 6 flows into the storage tank 1 through the pipe 45.

Thus, in the filtration device W3 described above, with the sub-filter B provided in parallel to the main filter A of the backwash type, the liquid (backwash liquid) discharged as a result of the backwash of the main filter A can be filtered, whereby the sub-filter B not used in the normal filtration process can be effectively used. Furthermore, since the backwash liquid containing foreign objects captured and removed by the main filter A is filtered by the sub-filter B and then returns to the storage tank 1, the sub-filter B also functions as a cleaner. Thus, the lubricant 2 in the storage tank 1 can be clean, without providing the storage tank 1 with a cleaner. Since no cleaner needs to be provided, a cost of the filtration device W3 can be reduced.

### Citation List

### Patent Literature

PTL 1: JP4225997B

### Summary of Invention

### Technical Problem

In the filtration device W3 described above, the backwash liquid flows out from the main filter A and flows into the sub-filter B, due to the pressure difference between the main filter A and the sub-filter B under use. The pressure difference between the main filter A and the sub-filter B under use constantly changes due to an impact of the hydraulic pressure of the lubricant 2 sent from the storage tank 1 to the main filter A, the clogging status of the sub-filter B, or the like.

In the filtration device W3 described above, the flow rate of the backwash liquid is high when the pressure difference described above is large, resulting in a low flow rate of "the filtered lubricant" supplied from the main filter A to the instrument 6. In the filtration device W3, the flow rate of the backwash liquid is low when the pressure difference described above is small, resulting in a high flow rate of "the filtered lubricant" supplied from the main filter A to the instrument 6.

Thus, in the filtration device W3 described above, a change in the pressure difference between the main filter A and the sub-filter B under use leads to a change in the flow rate of "the filtered lubricant (liquid)" flowing out from the main filter A, resulting in a problem in that the amount of "the filtered lubricant" supplied to the instrument 6 is unstable.

The present invention is made in view of the problem described above, and an object of the present invention is to provide a filtration device that includes a main filter of a backwash type and a sub-filter provided in parallel to the main filter, and is configured to stabilize the flow rate of filtered liquid flowing out from the main filter.

### Solution to Problem

A filtration device according to a first aspect of the present invention made to solve the problem described above includes a main filter of a backwash type and a sub-filter provided in parallel to the main filter, the filtration device characterized by including: a first pipe through which liquid in a storage tank flows into the main filter, and the liquid filtered flows out from the main filter to be supplied to an instrument; a second pipe through which the liquid in the storage tank flows into the sub-filter, and the liquid filtered flows out from the sub-filter; and a third pipe through which backwash liquid flowed out from the main filter flows into the sub-filter, characterized in that the sub-filter is configured to filter the backwash liquid flowing in through the third pipe, the third pipe is provided with a flow rate control unit configured to change a size of a flow path through which the liquid passes, based on a pressure difference between a pressure on side of the main filter and a pressure on side of the sub-filter, and the flow rate control unit is configured to enlarge and widen the flow path as the pressure difference decreases, and narrow and downsize the flow path as the pressure difference increases.

According to the first aspect of the present invention, the third pipe, through which backwash liquid flowed out from the main filter flows into the sub-filter, is provided with the flow rate control unit configured to change the size of the flow path through which the liquid passes, based on a pressure difference between the pressure on the side of the main filter and the pressure on the side of the sub-filter. This flow rate control unit is configured to enlarge and widen the flow path as the pressure difference described above decreases, and narrow and downsize the flow path as the pressure difference described above increases.

With this configuration, a constant flow rate of the backwash liquid flowing from the main filter to the sub-filter is maintained, even when the pressure difference between the main filter and the sub-filter changes. As a result, the flow rate of "the filtered liquid" flowing out from the main filter A can be stabilized.

For example, when the pressure difference between the pressure on the main filter side and the pressure on the sub-filter side becomes small due to a low pressure of the liquid sent from the storage tank to the main filter, clogging of the filtering element (filter) of the sub-filter, or the like, the flow rate control unit increases the size of "the flow path through which the liquid passes", whereby a constant flow rate of the backwash liquid flowing from the main filter to the sub-filter is maintained. For example, when the pressure difference between the pressure on the main filter side and the pressure on the sub-filter side becomes large, the flow rate control unit reduces the size of "the flow path through which the liquid passes", whereby a constant flow rate of the backwash liquid flowing from the main filter to the sub-filter is maintained. As a result, according to the first aspect of the present invention, a predetermined flow rate of "the filtered liquid" flowing out from the main filter is maintained (the flow rate of "the filtered liquid" flowing out from the main filter can be stabilized). Thus, according to the first aspect, "the filtered liquid" at a stable flow rate can be provided to the instrument.

Preferably, the first pipe is provided with a first valve configured to control flow-in and flow-in stop of the liquid to the main filter, the second pipe is provided with a second valve configured to control flow-in and flow-in stop of the liquid to the sub-filter, and a third valve configured to control flow-out and flow-out stop of the liquid from the sub-filter, a fourth pipe through which the liquid filtered and flowed out from the sub-filter flows into the storage tank is connected to a portion in the second pipe between the sub-filter and the third valve, the third pipe has one end portion connected to the main filter, and has another end portion connected to a portion in the second pipe between the second valve and the sub-filter, the fourth pipe is provided with a fourth valve configured to control flow-in and flow-in stop of the liquid to the storage tank, and during a normal filtration operation, with the first valve and the fourth valve open and the second valve and the third valve closed, the liquid in the storage tank flows into the main filter to be filtered by the main filter and flows out from the main filter to be supplied to the instrument as the liquid filtered, and backwash liquid flowing out from the main filter flows into the sub-filter through the third pipe and the second pipe to be filtered by the sub-filter and flows into the storage tank as the backwash liquid filtered.

A filtration device according to a second aspect of the present invention includes a main filter of a backwash type and a sub-filter provided in parallel to the main filter, the filtration device characterized by including: a first pipe through which liquid in a storage tank flows into the main filter, and the liquid filtered flows out from the main filter to be supplied to an instrument; a second pipe through which the liquid in the storage tank flows into the sub-filter, and the liquid filtered flows out from the sub-filter; and a third pipe through which backwash liquid flowed out from the main filter flows into the sub-filter, characterized in that the first pipe is provided with a first valve configured to control flow-in and flow-in stop of the liquid to the main filter, the second pipe is provided with a second valve configured to control flow-in and flow-in stop of the liquid to the sub-filter, and a third valve configured to control flow-out and flow-out stop of the liquid from the sub-filter, a fourth pipe through which the filtered liquid flowed out from the sub-filter flows into the storage tank, is connected to a portion in the second pipe between the sub-filter and the third valve, the third pipe has one end portion connected to the main filter, and has another end portion connected to a portion in the second pipe between the second valve and the sub-filter, the fourth pipe is provided with a fourth valve configured to control flow-in and flow-in stop of the liquid to the storage tank, and a flow rate control unit configured to change a size of a flow path through which the liquid passes, based on a pressure difference between a pressure on side of the sub-filter and a pressure on side of the storage tank, during a normal filtration operation, with the first valve and the fourth valve open and the second valve and the third valve closed, the liquid in the storage tank flows into the main filter to be filtered by the main filter and flows out from the main filter to be supplied to the instrument as the liquid filtered, and backwash liquid flowing out from the main filter flows into the sub-filter through the third pipe and the second pipe to be filtered by the sub-filter and flows into the storage tank as the backwash liquid filtered, and the flow rate control unit is configured to enlarge and widen the flow path as the pressure difference decreases, and narrow and downsize the flow path as the pressure difference increases.

In the second aspect of the present invention as described above, the fourth pipe through which the filtered liquid flowed out from the sub-filter flows into the storage tank, is provided with the flow rate control unit configured to change the size of the flow path through which the liquid passes, based on the pressure difference between the pressure on the side of the sub-filter and the pressure on the side of the storage tank. The flow rate control unit is configured to enlarge and widen the flow path as the pressure difference described above decreases, and narrow and downsize the flow path as the pressure difference increases.

Also with the configuration of the second aspect, as in the first aspect, a constant flow rate of the backwash liquid flowing from the main filter to the sub-filter is maintained, even when the pressure difference between the main filter and the sub-filter changes. As a result, the flow rate of "the filtered liquid" flowing out from the main filter can be stabilized.

Specifically, when the pressure difference between the main filter and the sub-filter becomes small in the third pipe due to the clogging of the filtering element (filter) of the sub-filter or the like, the pressure difference between the pressure on the sub-filter side and the pressure on the storage tank side becomes small in the fourth pipe. In this case, the flow rate control unit provided to the fourth pipe increases the size of "the flow path through which the liquid passes". On the other hand, when the pressure difference between the main filter and the sub-filter becomes large, and thus the pressure difference between the pressure on the sub-filter side and the pressure on the storage tank side becomes large in the fourth pipe, the flow rate control unit provided to the fourth pipe reduces the size of "the flow path through which the liquid passes". As a result, according to the second aspect of the present invention, a constant flow rate of the liquid (filtered backwash liquid) from the sub-filter to the storage tank is maintained in the fourth pipe, even when the pressure difference between the main filter and the sub-filter changes. With the flow rate of the liquid(filtered backwash liquid) from the sub-filter to the storage tank thus made constant in the fourth pipe, a constant flow rate of the backwash liquid from the main filter to the sub-filter is maintained in the third pipe. As a result, a predetermined flow rate of "the filtered liquid" flowing out from the main filter is maintained.

Preferably, the flow rate control unit is a constant flow rate valve including a spring configured to expand and contract based on the pressure difference, and a needle valve configured to move in response to the expansion and the contraction of the spring.

As described above, in the present invention, the flow rate control unit that changes the size of the flow path through which the liquid passes based on the pressure difference in the pipe (the third pipe or the fourth pipe) is formed by the spring based constant flow rate valve using no driving source such as a power source. The spring based constant flow rate valve requires no cumbersome maintenance and features low failure rate, compared with an instrument using the driving source. Thus, according to the present invention, a filtration device that requires no cumbersome maintenance and features high reliability is provided. The filtration device is particularly suitable for installation in a marine vessel, and the like.

### Advantageous Effects of Invention

According to the present invention, a filtration device can be provided that includes a main filter of a backwash type and a sub-filter provided in parallel to the main filter, and is configured to stabilize the flow rate of filtered liquid flowing out from the main filter.

### Brief Description of Drawings

[FIG. 1] FIG. 1 is a schematic view illustrating an overall configuration of a filtration device according to Embodiment 1 of the present invention, and is a schematic view illustrating a flow of lubricant during a normal filtration operation.
[FIG. 2] FIG. 2 is a schematic view illustrating an overall configuration of the filtration device according to Embodiment 1 of the present invention, and is a schematic view illustrating a flow of the lubricant during a filtration operation without using a main filter due to a reason such as an emergency occurring in the main filter.
[FIG. 3] FIG. 3 is a schematic view illustrating a configuration of a flow rate control unit provided to the filtration device according to Embodiment 1 of the present invention, (a) being a schematic view illustrating a state where a flow path is widened, (b) being a schematic view illustrating a state where the flow path is narrowed.
[FIG. 4] FIG. 4 is a schematic view illustrating an overall configuration of a filtration device according to Embodiment 2 of the present invention, and is a schematic view illustrating a flow of lubricant during the normal filtration operation.
[FIG. 5] FIG. 5 is a schematic view illustrating an overall configuration of a filtration device according to a conventional technique.

### Description of Embodiments

Filtration devices according to embodiments (Embodiment 1 and Embodiment 2) of the present invention will be described below based on the drawings.

### <<Embodiment 1>>

A filtration device according to Embodiment 1 of the present invention will be described.

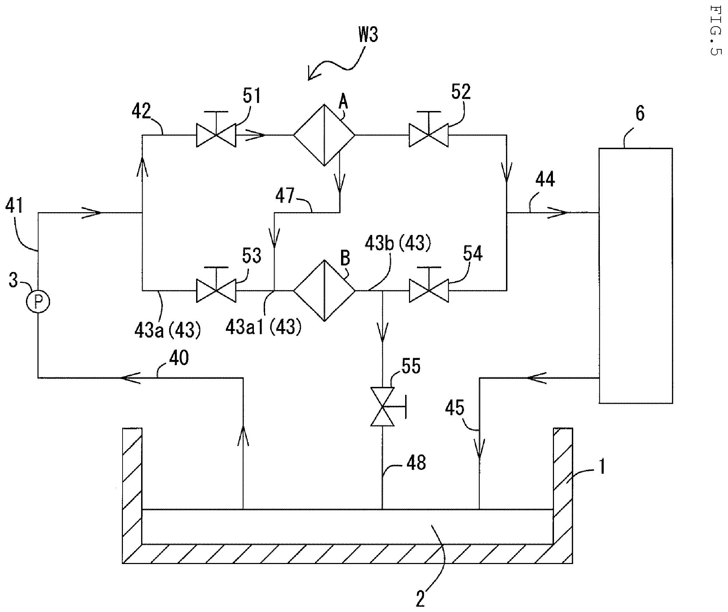

The filtration device according to Embodiment 1 is an improved version of "the filtration device W3 according to the conventional technique" illustrated in FIG. 5 described above, and thus a configuration that is the same as (or a configuration corresponding to) that in the conventional technique described above is denoted by the same reference sign.

### <Configuration of filtration device W1>

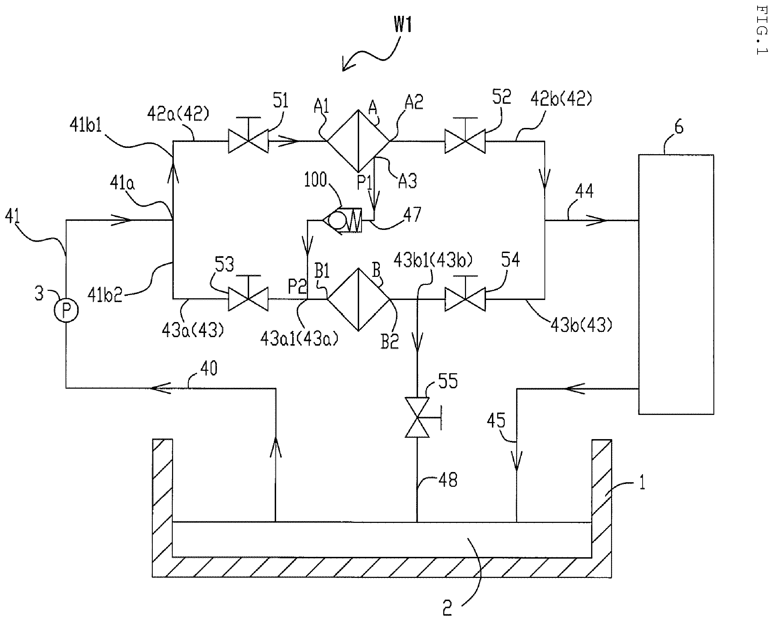

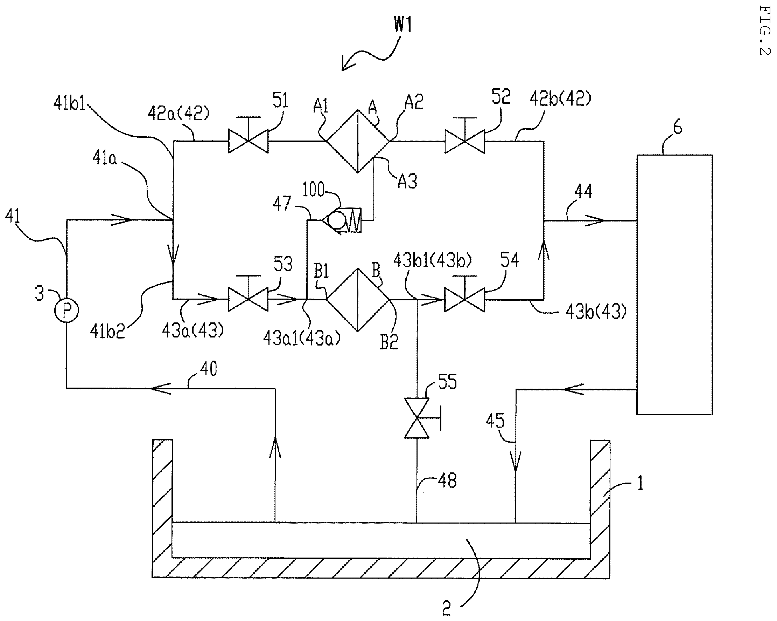

First of all, a configuration of the filtration device W1 according to Embodiment 1 will be described with reference to FIGS. 1 and 2.

FIG. 1 is a schematic view illustrating an overall configuration of the filtration device according to Embodiment 1, and is a schematic view illustrating a flow of lubricant during a normal filtration operation. FIG. 2 is a schematic view illustrating an overall configuration of the filtration device according to Embodiment 1, and is a schematic view illustrating a flow of the lubricant during a filtration operation without using a main filter due to a reason such as an emergency occurring in the main filter.

The filtration device W1 according to Embodiment 1 is used for filtering lubricant 2 used in an instrument 6 installed in a marine vessel, for example. The filtration device W1 pumps the lubricant 2, used and contaminated in the instrument 6, from a storage tank 1 storing the lubricant 2, filters the lubricant 2 to remove foreign objects, and supplies the filtered lubricant 2 to the instrument 6. The instrument 6 discharges the used and contaminated lubricant 2 to the storage tank 1. Thus, in the present embodiment, the lubricant 2 circulates among the storage tank 1, the filtration device W1, and the instrument 6.

In the filtration device W1 according to Embodiment 1, during the normal filtration operation, as illustrated in FIG. 1, the lubricant 2 pumped from the storage tank 1 flows into the main filter A to be filtered by the main filter A for the removal of the foreign objects, and the clean filtered lubricant 2 is supplied to the instrument 6, as in the filtration device W3 according to the conventional technique (see FIG. 5). Furthermore, in the filtration device W1, backwash liquid (backwash oil) as a result of backwash of the main filter A flows into a sub-filter B to be filtered by the sub-filter B, and the backwash liquid (backwash oil) thus filtered is discharged and returns to the storage tank 1. The lubricant 2 after the use in the instrument 6 also returns to the storage tank 1.

In the filtration device W1 according to Embodiment 1, when the main filter A is not used due to a reason such as an emergency occurring in the main filter A, as illustrated in FIG. 2, the lubricant 2 pumped from the storage tank 1 flows into the sub-filter B to be filtered by the sub-filter B and then flows out. Then, the lubricant 2 filtered by the sub-filter B is supplied to the instrument 6.

Specifically, as illustrated in FIG. 1, the filtration device W1 includes a pump 3 that pumps the lubricant (liquid) 2 stored in the storage tank 1, the main filter A of a backwash type, and the sub-filter B provided in parallel to the main filter A, as in the filtration device W3 according to the conventional technique (see FIG. 5). The main filter A filters the lubricant 2 pumped from the storage tank 1, and the backwash liquid as a result of backwash processing flows out therefrom. The sub-filter B filters the backwash liquid flowed out from the main filter A, or filters the lubricant 2 pumped from the storage tank 1.

The main filter A, which is what is known as a filter of a backwash type, includes an inlet A1 through which the lubricant 2 flows in, a plurality of filtering elements (filter elements) that are strain nets and the like that filter the lubricant 2, an outlet A2 through which the lubricant 2 filtered by the filtering elements flows out, and a backwash liquid outlet A3 through which the backwash liquid (the lubricant 2 used for the self-backwashing) flows out.

The main filter A has a self-backwashing structure. Specifically, to part of (for example, one of) the plurality of filtering elements (five filtering elements, for example), the clean lubricant 2 as a result of filtering by the other filtering elements (the remaining four filtering elements, for example) flows in a direction opposite to that in the normal filtration processing. Thus, the part of the filtering elements is cleaned. In the self-backwashing structure, the part of the filtering elements to be cleaned is sequentially switched, whereby each of the filtering elements is cleaned. The filtering elements of the main filter A described above have an appropriate filtering accuracy, which is preferably, for example, 25 to 50 µm, and may be more preferably 40 to 50 µm.

The self-backwashing structure described above is a known technique, and thus the description on the specific configuration thereof will be omitted.

The sub-filter B provided in parallel to the main filter A includes an inlet B1 through which the lubricant 2 flows in, a filtering element (filter element) that is a filter that filters the lubricant 2, and an outlet B2 through which the lubricant 2 filtered by the filtering element flows out.

For example, the filtering element of the sub-filter B used is of a replaceable and disposable cartridge type. The filtering elements of the sub-filter B has an appropriate filtering accuracy, which is preferably, for example, 5 to 20 µm, and may be more preferably 10 to 20 µm.

The filtration device W1 includes: a pipe (pump connection pipe) 40 connecting the storage tank 1 and the pump 3 to each other; a pipe (pump connection pipe) 41 through which the lubricant 2 pumped by the pump 3 flows out from the pump 3; a pipe (first pipe) 42 through which the lubricant 2 pumped by the pump 3 flows into the main filter A, the filtered lubricant 2 flows out from the main filter A, and the filtered lubricant 2 is supplied to the instrument 6; and a pipe (second pipe) 43 through which the lubricant 2 pumped by the pump 3 flows into the sub-filter B and the filtered lubricant 2 flows out from the sub-filter B.

The pipe 41 has one end portion connected to the pump 3, and is branched into two paths (two pipes that are a pipe 41b1 and a pipe 41b2) at a branch part 41a provided at an intermediate part. The pipe 41b1 which is one of the two paths has an end portion connected to one end portion of the pipe 42. The pipe 41b2 which is the other one of the two paths has an end portion connected to one end portion of the pipe 43.

The pipe 42 has the other end portion coupled (joined) to the other end portion of the pipe 43. A pipe (instrument connection pipe) 44 connected to the instrument 6 is connected to this joined part. The instrument 6 is provided with a pipe (discharging pipe) 45 through which the lubricant 2 after the use flows out into the storage tank 2 (the instrument 6 and the storage tank 1 are connected to each other through the pipe 45).

The pipe (first pipe) 42 described above to which the main filter A is connected is provided with a first valve (opening-closing valve) 51 that controls flow-in and flow-in stop of the lubricant 2 to the main filter A, and a fourth valve (opening-closing valve) 52 that controls flow-out and flow-out stop of the lubricant 2 (filtered lubricant 2) from the main filter A.

Specifically, the pipe 42 includes "a pipe 42a that has one end portion connected to the pipe 41b1 and the other end portion connected to the inlet A1 of the main filter A" and "a pipe 42b that has one end portion connected to the outlet A2 of the main filter A and the other end portion connected to the pipe 44". The pipe 42a is provided with the first valve 51, and the pipe 42b is provided with the fourth valve 52. Thus, the pipe 42 is provided with the first valve 51 and the fourth valve 52 sandwiching the main filter A on the up and downstream sides thereof.

The pipe 43 (second pipe) described above, to which the sub-filter B is connected, is provided with a second valve (opening-closing valve) 53 that controls flow-in and flow-in stop of the lubricant 2 to the sub-filter B, and a third valve (opening-closing valve) 54 that controls flow-out and flow-out stop of the lubricant 2 (filtered lubricant 2) from the sub-filter B.

Specifically, the pipe 43 includes "a pipe 43a that has one end portion connected to the pipe 41b2 and the other end portion connected to the inlet B1 of the sub-filter B" and "a pipe 43b that has one end portion connected to the outlet B2 of the sub-filter B and the other end portion connected to the pipe 44". The pipe 43a is provided with the second valve 53 and the pipe 43b is provided with the third valve 54. Thus, the pipe 43 is provided with the second valve 53 and the third valve 54 sandwiching the sub-filter B on the up and downstream sides thereof.

In Embodiment 1, the pipe 47 (third pipe) is provided through which the backwash liquid (the lubricant 2 after the use for the self-backwashing) flowed out from the backwash liquid outlet A3 of the main filter A flows into a portion between the second valve 53 and the sub-filter B (the pipe 47 is provided through which the backwash liquid flows into the sub-filter B).

Specifically, the pipe 47 has one end portion connected to the backwash liquid outlet A3 of the main filter A, and has the other end portion connected to "a portion (43a1) in the pipe 43a between the second valve 53 and the sub-filter B"**.**

The pipe (fourth pipe) 48 through which the lubricant 2 (filtered backwash liquid) flowed out from the sub-filter B is discharged to the storage tank 1 is connected to a portion (43b1) in the pipe 43b between the sub-filter B and the third valve 54. The pipe 48 is provided with a fifth valve (opening-closing valve) 55 that controls flow-out and flow-out stop of the lubricant 2 (filtered lubricant 2) from the sub-filter B.

Furthermore, the pipe 47 (third pipe) through which the backwash liquid (lubricant 2) flowed out from the backwash liquid outlet A3 of the main filter A flows to the portion (43a1) in the pipe 43a (43) between the second valve 53 and the sub-filter B is provided with a flow rate control unit 100 that changes the size of a flow path through which the backwash liquid (lubricant 2) passes, based on a pressure difference (ΔP = P1 - P2) between a pressure (P1) on the main filter A side and a pressure (P2) on the sub-filter B side in the pipe (third pipe) 47.

The flow rate control unit 100 widens and enlarges the flow path as the pressure difference (ΔP) described above decreases, and narrows and downsizes the flow path as the pressure difference (ΔP) described above increases.

With the flow rate control unit 100 thus provided, a constant flow rate of the backwash liquid flowing from the main filter A to the sub-filter B is maintained (appropriate flow rate of the backwash liquid is guaranteed), even when the pressure difference (ΔP) between the main filter A and the sub-filter B changes. As a result, the flow rate of "the filtered liquid (lubricant 2)" flowing out from the main filter A can be stabilized. Thus, the filtration device W1 according to Embodiment 1 can provide the liquid (filtered lubricant 2) to the instrument 6 at a stable flow rate.

For example, when the pressure difference (ΔP) between the pressure (P1) on the main filter A side and the pressure (P2) on the sub-filter B side becomes small due to a low pressure of the lubricant 2 sent from the storage tank 1 to the main filter A, clogging of the filtering element (filter) of the sub-filter B, or the like, the flow rate control unit 100 increases the size of "the flow path through which the backwash liquid (lubricant 2) passes", whereby a constant flow rate of the backwash liquid flowing from the main filter A to the sub-filter B is maintained. For example, when the pressure difference (ΔP) between the pressure (P1) on the main filter A side and the pressure (P2) on the sub-filter B side becomes large, the flow rate control unit 100 reduces the size of "the flow path through which the backwash liquid (backwash liquid ) passes", whereby a constant flow rate of the backwash liquid flowing from the main filter A to the sub-filter B is maintained. As a result, according to Embodiment 1, the flow rate of "the filtered liquid (lubricant 2)" flowing out from the main filter A can be stabilized.

### <Flow rate control unit 100>

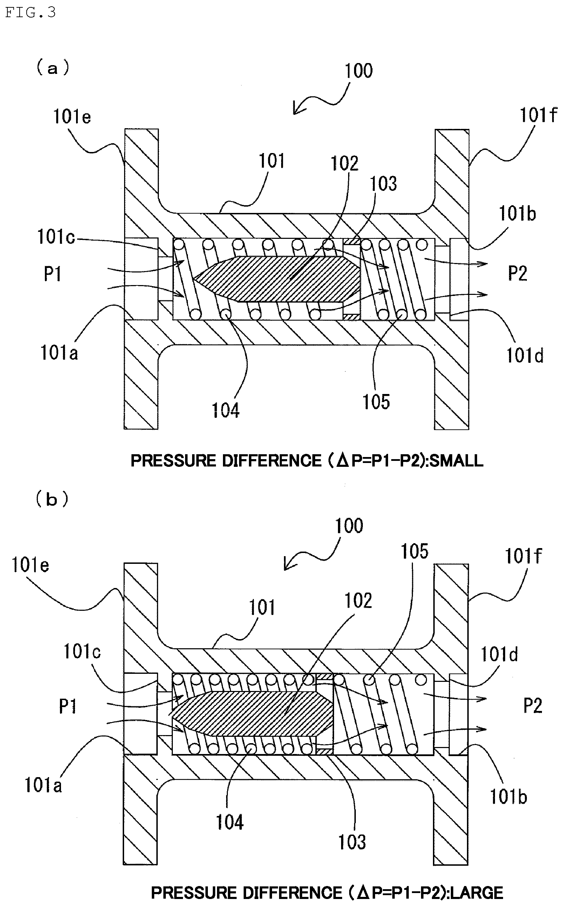

Next, a configuration of the flow rate control unit 100 according to Embodiment 1 will be described with reference to FIG. 3.

FIG. 3 is a schematic view illustrating a configuration of the flow rate control unit provided to the filtration device according to Embodiment 1, (a) being a schematic view illustrating a state where the flow path is widened, (b) being a schematic view illustrating a state where the flow path is narrowed.

The flow rate control unit 100 according to Embodiment 1 is formed by "a spring based constant flow rate valve" that changes the size of the flow path through which the liquid (lubricant 2) passes, based on the differential pressure (ΔP = P1 - P2) which is the pressure difference between the pressure (P1) on the main filter A side and the pressure (P2) on the sub-filter B side in the pipe (third pipe) 47. The constant flow rate valve (flow rate control unit 100) is configured in such a manner that the flow path is enlarged to be larger as the pressure difference (ΔP) decreases, and the flow path is narrowed to be smaller as the pressure difference (ΔP) increases.

Specifically, the constant flow rate valve (flow rate control unit 100) includes a main body portion 101 that has openings formed at both ends, and is formed to be in a substantially hollow cylindrical shape with the openings at both ends in communication with each other.

The main body portion 101 has an opening 101a on the one end portion side serving as an inlet for the liquid (the backwash liquid (lubricant 2) in Embodiment 1), and an opening 101b on the other end portion side serving as an outlet for the liquid. The main body portion 101 has a spring holder portion 101c formed in one end portion side tube, and has a spring holder portion 101d formed in the other end side tube.

The tube of the main body portion 101 contains a needle valve 102, an annular slide member 103 fixed to a distal end portion of the needle valve 102 (the end portion on the other end side), a first spring (coil spring) 104 that is sandwiched between the spring holder portion 101c and the slide member 103, and a second spring (coil spring) 105 sandwiched between the spring holder portion 101d and the slide member 103.

Flanges 101e and 101f are respectively formed in outer side portions at both ends of the main body portion 101 described above.

In the one end portion side (inlet side) tube of the main body portion 101, the spring holder portion 101c protrudes inward in the radial direction. In the other end portion side (outlet side) tube of the main body portion 101, the spring holder portion 101d protrudes inward in the radial direction.

The annular slide member 103 is formed to have an outer diameter dimension slightly smaller than the inner diameter dimension of the main body portion 101, to be slidable to move forward and backward on the inner circumference side surface of the main body portion 101.

The first spring (coil spring) 104 and the second spring (coil spring) 105 are each formed to have an outer diameter dimension slightly smaller than the inner diameter dimension of the main body portion 101.

The first spring (coil spring) 104 is disposed to cover the outer circumference side surface of the needle valve 102 in the tube of the main body portion 101.

In this spring based constant flow rate valve (flow rate control unit 100), when the pressure difference described above is small (ΔP = P1 - P2 = a), as illustrated in FIG. 3(a), the first spring 104 expands and the second spring 105 contracts, whereby the needle valve 102 and the slide member 103 are biased toward the outlet side. Thus, the needle valve 102 is separated from the spring holder portion 104a on the inlet side, whereby the flow path on the inlet side is widened to be large.

Thus, even when the pressure difference (ΔP = P1 - P2) described above is small, the flow of the backwash liquid (lubricant 2) from the main filter A to the sub-filter B can be guaranteed.

Compared with the state illustrated in FIG. 3(a), in the constant flow rate valve (flow rate control unit 100) described above, when the pressure difference is large (ΔP = P1 - P2 = b > a), as illustrated in FIG. 3(b), the first spring 104 contracts and the second spring 105 expands, whereby the needle valve 102 and the slide member 103 are biased toward the inlet side. As a result, the needle valve 102 approaches the spring holder portion 104a on the inlet side, whereby the flow path on the inlet side is narrowed to be small. In this state, since the pressure difference (ΔP) is large, the backwash liquid (lubricant 2) can flow out from the main filter A to the sub-filter B at a predetermined flow rate.

As described above, in Embodiment 1, the flow rate control unit 100 is formed by "the spring based constant flow rate valve" that changes the size of the flow path through which the liquid (lubricant 2) passes, based on the magnitude of the pressure difference (ΔP = P1 - P2). The spring based constant flow rate valve operates without using a driving source such as a power source, and thus requires no cumbersome maintenance and features low failure rate, compared with an instrument using the driving source. Thus, according to Embodiment 1, the filtration device W1 that requires no cumbersome maintenance and features high reliability is provided.

The filtration device W1 according to Embodiment 1 uses "the spring based constant flow rate valve" as the flow rate control unit 100, but is not particularly limited to this. It suffices if the flow rate control unit 100 has a function of changing the size of the flow path through which the liquid (lubricant 2) passes, based on the magnitude of the pressure difference (ΔP = P1 - P2). For example, the flow rate control unit 100 may be formed by a constant flow rate valve driven by a motor.

### <Operation of filtration device W1>

Next, a filtration operation by the filtration device W1 according to Embodiment 1 will be described, while being classified into "a normal filtration operation" and "a filtration operation without using the main filter".

First of all, "the normal filtration operation" by the filtration device W1 will be described with reference to FIG. 1.

The normal filtration operation is performed with the filtration device W1 set as follows. Specifically, the first valve 51, the fourth valve 52, and the fifth valve 55 are set to be opened (open state), and the second valve 53 and the third valve 54 are set to be closed (closed state). Then, the pump 3 is driven.

The pump 3 driven pumps the lubricant 2 stored in the storage tank 1. The pumped lubricant 2 flows into the main filter A. Specifically, the lubricant 2 stored in the storage tank 1 is pumped by the pump 3 from the storage tank 1, flows through the pipe 40 to flow into the pump 3, flows into the pipe 41 through the pump 3, then flows into the pipe 42a through the pipe 41b1, passes through the first valve 51 in the open state provided in the pipe 42a, and flows into the main filter A through the inlet A1 of the main filter A.

The lubricant 2 flowed into the main filter A from the pipe 42a is filtered by the most of the filtering elements of the main filter A. Thus, the foreign objects are removed. The most of the resultant filtered lubricant 2 flows out from the outlet A2 into the pipe 42b, passes through the fourth valve 52 in the open state provided in the pipe 42b to flow into the pipe 44, and then is introduced (flows) into the instrument 6. The lubricant 2 introduced into the instrument 6 is used in the instrument 6, and the lubricant 2 contaminated due to the use flows out from the instrument 6 and into the storage tank 1 through the pipe 45.

In the main filter A, part of the lubricant 2 filtered by the most of the filtering elements flows in a direction opposite to the normal direction toward part of the filtering elements to be washed, to be used for washing the part of the filtering elements. Thus, the part of the filtering elements is washed (backwashed). The lubricant 2 contaminated due to the backwash flows out from the backwash liquid outlet A3 and into the pipe 47, to be sent to the portion (43a1) in the pipe 43a between the second valve 53 and the sub-filter B. In this process, since the second valve 53 is in the closed state, the backwash liquid (lubricant 2) flowing into the pipe 43a located between the second valve 53 and the filter B is introduced into the sub-filter B from the pipe 43a (the backwash liquid flows into the inlet B1 of the sub-filter B through the pipe 47 and the pipe 43).

The pipe 47 is provided with the flow rate control unit 100 formed by "the spring based constant flow rate valve".

With this configuration of the flow rate control unit 100, for example, when the pressure difference (ΔP) between the pressure (P1) on the main filter A side and the pressure (P2) on the sub-filter B side becomes small due to a low hydraulic pressure of the lubricant 2 sent from the storage tank 1 to the main filter A, clogging of the filtering element (filter) of the sub-filter B, or the like, the flow rate control unit 100 enlarges and widens "the flow path through which the lubricant 2 passes", whereby a constant flow rate of the backwash liquid (lubricant 2) flowing from the main filter A to the sub-filter B is maintained. For example, when the pressure difference (ΔP) between the pressure (P1) on the main filter A side and the pressure (P2) on the sub-filter B side becomes large, the flow rate control unit 100 narrows the size of "the flow path through which the backwash liquid (lubricant 2) passes", whereby a constant flow rate of the backwash liquid (lubricant 2) flowing from the main filter A to the sub-filter B is maintained. As a result, with Embodiment 1, the flow rate of "the filtered liquid" flowing out from the main filter A can be stabilized. Thus, with Embodiment 1, the lubricant (filtered lubricant 2) can be provided to the instrument 6 at a stable flow rate.

The backwash liquid (lubricant 2) introduced into the sub-filter B is filtered and cleaned in the sub-filter B. Then, the filtered lubricant 2 is discharged to the pipe 43b from the outlet B2 of the sub-filter B. In this process, the third valve 54 is in the closed state and the fifth valve 55 is in the open state, whereby the lubricant 2 filtered and discharged flows into the storage tank 1 through the pipe 48.

Next, "the filtration operation without using the main filter A" by the filtration device W1 will be described with reference to FIG. 2.

Note that "a case without using the main filter A" refers to a case where an emergency occurs in the main filter A, a case where the main filter A is washed, a case where the lubricant flushing is performed at the time of initial operation of the instrument 6, or the like.

When the filtration operation without using the main filter A is performed, the filtration device W1 is set as follows. Specifically, the first valve 51, the fourth valve 52, and the fifth valve 55 are set to be closed (closed state), and the second valve 53 and the third valve 54 are set to be opened (open state). Then, the pump 3 transitions to the driving state.

The pump 3 driven pumps the lubricant 2 stored in the storage tank 1 from the storage tank 1. Then, the lubricant 2 flows into the pump 3 through the pipe 40, and flows into the pipe 41 through the pump 3. Thereafter, the lubricant 2 flows into the pipe 43 and passes through the second valve 53 in the open state to flow into (be introduced into) the sub-filter B through the inlet B1 of the sub-filter B.

The lubricant 2 flowed into the sub-filter B is filtered by the sub-filter B, and then is discharged from the outlet B2 of the sub-filter B to the pipe 43b between the sub-filter B and the third valve 54. In this process, since the third valve 54 is in the open state and the fifth valve 55 is in the closed state, the lubricant 2 filtered and discharged flows into the pipe 44 through the third valve 54 in the open state to be supplied to the instrument 6. The lubricant 2 introduced into the instrument 6 is used in the instrument 6, and the lubricant 2 contaminated due to the use flows out from the instrument 6 and into the storage tank 1 through the pipe 45.

With Embodiment 1 as described above, a constant flow rate of the backwash liquid flowing from the main filter A to the sub-filter B is maintained, even when the pressure difference (ΔP) between the main filter A and the sub-filter B changes. As a result, a predetermined flow rate of "the filtered liquid" flowing out from the main filter A is maintained.

In Embodiment 1, the flow rate control unit 100 is formed by "the spring based constant flow rate valve" and thus no driving source such as a power source needs to be provided, whereby cumbersome maintenance is not required and the cost of the instrument itself can be reduced, as compared with an instrument using the driving source. Furthermore, "the spring based constant flow rate valve" features low failure rate and high reliability compared with an instrument using a driving source, and thus is suitable as an instrument installed in marine vessels.

As described above, Embodiment 1 of the present invention can provide the filtration device W1 that includes the main filter A of the backwash type and the sub-filter B provided in parallel to the main filter A, and is configured to stabilize the flow rate of the filtered liquid flowing out from the main filter A.

### <<Embodiment 2>>

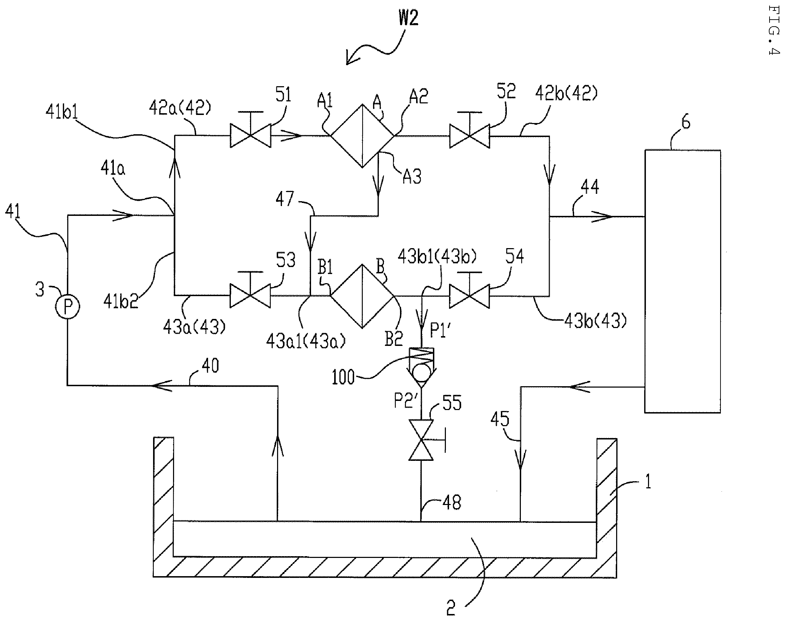

Next, a configuration of a filtration device W2 of Embodiment 2 will be described with reference to FIG. 4.

FIG. 4 is a schematic view illustrating an overall configuration of the filtration device according to Embodiment 2 of the present invention, and is a schematic view illustrating a flow of lubricant during the normal filtration operation.

The filtration device W2 of Embodiment 2 is obtained by changing the installed position of the flow rate control unit 100 in the filtration device W1 according to Embodiment 1, and is the same as Embodiment 1 except for the installed position of the flow rate control unit 100. Thus, the components that are the same as (or the components corresponding to) those in Embodiment 1 described above are denoted by the same reference signs, and will be simply described or the description thereof will be omitted.

### <Configuration of filtration device W2>

As illustrated in FIG. 4, the filtration device W2 of Embodiment 2 includes the pump 3 that pumps the lubricant (liquid) 2 stored in the storage tank 1, the main filter A of a backwash type, and the sub-filter B provided in parallel to the main filter A, as in the filtration device W1 according to Embodiment 1 (see FIGS. 1 and 2).

The configuration of the main filter A and the sub-filter B is the same as that in Embodiment 1.

The filtration device W2 includes: the pipe (pump connection pipe) 40 connecting the storage tank 1 and the pump 3 to each other; the pipe (pump connection pipe) 41 through which the lubricant 2 pumped by the pump 3 flows out from the pump 3; the pipe (first pipe) 42 through which the lubricant 2 pumped by the pump 3 flows into the main filter A, the filtered lubricant 2 flows out from the main filter A, and the filtered lubricant 2 is supplied to the instrument 6; and the pipe (second pipe) 43 through which the lubricant 2 pumped by the pump 3 flows into the sub-filter B and the filtered lubricant 2 flows out from the sub-filter B.

The pipe 42 described above to which the main filter A is connected is provided with the first valve (opening-closing valve) 51 that controls flow-in and flow-in stop of the lubricant 2 to the main filter A, and the fourth valve (opening-closing valve) 52 that controls flow-out and flow-out stop of the lubricant 2 (filtered lubricant 2) from the main filter A.

The pipe 43 described above, to which the sub-filter B is connected, is provided with the second valve (opening-closing valve) 53 that controls flow-in and flow-in stop of the lubricant 2 to the sub-filter B, and the third valve (opening-closing valve) 54 that controls flow-out and flow-out stop of the lubricant 2 (filtered lubricant 2) from the sub-filter B.

The filtration device W2 is provided with the pipe 47 (third pipe) through which the backwash liquid (the lubricant 2 used in the self-backwashing) flowed out from the backwash liquid outlet A3 of the main filter A flows into a portion in the pipe 43 between the second valve 53 and the sub-filter B (provided with the pipe 47 through which the backwash liquid flows into the sub-filter B).

The filtration device W2 of Embodiment 2 does not have the flow rate control unit 100 provided in the pipe 47 (third pipe) .

The pipe (fourth pipe) 48 through which the lubricant 2 (filtered lubricant 2) flowed out from the sub-filter B is discharged to the storage tank 1 is connected to the portion (43b1) in the pipe (second pipe) 43 between the sub-filter B and the third valve 54. The pipe 48 is provided with the fifth valve (opening-closing valve) 55 that controls flow-out and flow-out stop of the lubricant 2 (filtered lubricant 2) from the sub-filter B.

In the filtration device W2 of Embodiment 2, the flow rate control unit 100 is provided at a position between the portion (43b1) of connection to the pipe (second pipe) 43 and the fifth valve 55, in the pipe 48.

The flow rate control unit 100 is configured to change the size of the flow path through which "the filtered lubricant 2 (liquid)" passes, based on a pressure difference (ΔP' = P1' - P2') between a pressure (P1') on the sub-filter B side and a pressure (P2') on the storage tank 1 side in the fourth pipe 48.

An element (spring based constant flow rate valve) similar to that in Embodiment 1 as illustrated in FIG. 3 is used for the flow rate control unit 100. The flow rate control unit 100 is configured to enlarge and widen the flow path as the pressure difference (ΔP') described above decreases, and to narrow and downsize the flow path as the pressure difference (ΔP') increases.

The flow rate control unit 100 is provided to the pipe (fourth pipe) 48 as described above for the following reason.

In the filtration device W2 of Embodiment 2, the pressure difference between the main filter A and the sub-filter B under use constantly changes due to an impact of the hydraulic pressure of the lubricant 2 sent from the storage tank 1 to the main filter A, the clogging status of the sub-filter B, or the like, as in the filtration device W1 of Embodiment 1 (FIGS. 1 and 2) and the filtration device W3 of the conventional technique (FIG. 5). For example, a decrease in the pressure difference between the main filter A and the sub-filter B due to the clogging of the filtering element (filter) of the sub-filter B and the like, leads to a phenomenon that a pressure difference between the pressure on the sub-filter B side and the pressure on the storage tank 1 side becomes small in the pipe (fourth pipe) 48. On the other hand, an increase in the pressure difference between the main filter A and the sub-filter B leads to a phenomenon that the pressure difference between the pressure on the sub-filter B side and the pressure on the storage tank 1 side becomes large in the pipe (fourth pipe) 48.

Thus, in Embodiment 2, the pipe (fourth pipe) 48 through which the filtered lubricant 2 flowed out from the sub-filter B flows into the storage tank 1 is provided with the flow rate control unit 100 that changes the size of the flow path through which the lubricant 2 passes, based on the pressure difference (ΔP' = P1' - P2') between the pressure (P1') on the sub-filter B side and the pressure (P2') on the storage tank 1 side.

With this configuration, when the pressure difference between the main filter A and the sub-filter B becomes small due to clogging of the filtering element (filter) of the sub-filter B or the like, and accordingly the pressure difference (ΔP' = P1' - P2') between the pressure (P1') on the sub-filter B side and the pressure (P2') on the storage tank 1 side in the pipe (fourth pipe) 48 becomes small, the flow rate control unit 100 enlarges and widens "the flow path through which the lubricant 2 passes". On the other hand, when the pressure difference between the main filter A and the sub-filter B becomes large, and accordingly the pressure difference (ΔP' = P1' - P2') between the pressure (P1') on the sub-filter B side and the pressure (P2') on the storage tank 1 side in the pipe (fourth pipe) 48 becomes large, the flow rate control unit 100 reduces the size of "the flow path through which the lubricant 2 passes". As a result, in Embodiment 2, a constant flow rate of the lubricant (filtered backwash liquid) 2 from the sub-filter B to the storage tank 1 is maintained in the pipe (fourth pipe) 48, even when the pressure difference between the main filter A and the sub-filter B changes. With the flow rate of the lubricant (filtered backwash liquid) 2 from the sub-filter B to the storage tank 1 thus made constant in the pipe 48, a constant flow rate of the backwash liquid from the main filter A to the sub-filter B is maintained in the pipe (third pipe) 47. As a result, with Embodiment 2, a predetermined flow rate of "the filtered liquid" flowing out from the main filter A is maintained as in Embodiment 1.

The filtration operation by the filtration device W2 of Embodiment 2 is the same as that by the filtration device W1 according to Embodiment 1, and thus the description thereof will be omitted.

As described above, Embodiment 2 can provide the filtration device W2 that includes the main filter A of the backwash type and the sub-filter B provided in parallel to the main filter A, and is configured to stabilize the flow rate of the filtered liquid flowing out from the main filter A, as in Embodiment 1.

In Embodiment 1 described above, the pipe 47 is provided with the flow rate control unit 100, so that the filtration device W1 can be configured to have a compact size (the flow rate control unit 100 can be incorporated in the filtration device W1). Still, the constant flow rate valve forming the flow rate control unit 100 provided to the pipe 47 requires a low pressure, that is, a low minimum control pressure difference of "0.03 MPa". Thus, in Embodiment 1, the constant flow rate valve of a high performance type is required.

On the other hand, in Embodiment 2, the pipe 48 is provided with the flow rate control unit 100. Since this pipe 48 is a line (atmospheric pressure) returning to the storage tank 1 together with the pressure of the sub-filter B, the minimum control pressure difference of the constant flow rate valve forming the flow rate control unit 100 only needs to be about "0.1 MPa". Thus, a constant flow rate valve of a type with the performance lower than that required in Embodiment 1 may be used. Still, the filtration device W2 cannot be configured to have a compact size as compared with Embodiment 1, because the constant flow rate valve is attached to the pipe 48.

In the embodiments (Embodiments 1 and 2) described above, an example where the filtration target liquid is the lubricant 2 is described, but liquid other than the lubricant 2 may be filtered.

### Reference Signs List

W1, W2: filtration device
A: main filter
A1: inlet (main filter)
A2: outlet (main filter)
A3: backwash liquid outlet (main filter)
B: sub-filter
B1: inlet (sub-filter)
B2: outlet (sub-filter)
1: storage tank
2: lubricant
3: pump
40: pipe (pump connection pipe)
41: pipe (pump connection pipe)
41a: branch part (pump connection pipe)
41b1, 41b2: pipe (pump connection pipe)
42: pipe (first pipe)
42a, 42b: pipe (first pipe)
43, 43a, 43a1, 43b, 43b1: pipe (second pipe)
44: pipe
45: pipe
47: pipe (third pipe)
48: pipe (fourth pipe)
51: first valve
52: fourth valve
53: second valve
54: third valve
55: fifth valve
100: flow rate control unit
101: main body portion
101a, 101b: spring holder portion
101e, 101f: flange
102: needle valve
103: slide member
104: first spring
105: second spring

## Claims

1. A filtration device (W1) that comprises a main filter (A) of a backwash type and a sub-filter (B) provided in parallel to the main filter (A), the filtration device (W1) **characterized by** comprising:
a first pipe (42) through which liquid in a storage tank (1) flows into the main filter (A), and the liquid filtered flows out from the main filter (A) to be supplied to an instrument (6);
a second pipe (43) through which the liquid in the storage tank (1) flows into the sub-filter (B) and the liquid filtered flows out from the sub-filter (B); and
a third pipe (47) through which backwash liquid flowed out from the main filter (A) flows into the sub-filter (B), **characterized in that**
the sub-filter (B) is configured to filter the backwash liquid flowing in through the third pipe (47),
the third pipe (47) is provided with a flow rate control unit (100) configured to change a size of a flow path through which the liquid passes, based on a pressure difference between a pressure on side of the main filter (A) and a pressure on side of the sub-filter (B), and
the flow rate control unit (100) is configured to enlarge and widen the flow path as the pressure difference decreases, and narrow and downsize the flow path as the pressure difference increases.

2. The filtration device (W1) according to claim 1, **characterized in that**
the first pipe (42) is provided with a first valve (51) configured to control flow-in and flow-in stop of the liquid to the main filter (A),
the second pipe (43) is provided with a second valve (53) configured to control flow-in and flow-in stop of the liquid to the sub-filter (B), and a third valve (54) configured to control flow-out and flow-out stop of the liquid from the sub-filter (B),
a fourth pipe (48) through which the liquid filtered and flowed out from the sub-filter (B) flows into the storage tank (1) is connected to a portion in the second pipe (43) between the sub-filter (B) and the third valve (54),
the third pipe (47) has one end portion connected to the main filter (A), and has another end portion connected to a portion in the second pipe (43) between the second valve (53) and the sub-filter (B),
the fourth pipe (48) is provided with a fourth valve (55) configured to control flow-in and flow-in stop of the liquid to the storage tank (1), and
during a normal filtration operation, with the first valve (51) and the fourth valve (55) open and the second valve (53) and the third valve (54) closed, the liquid in the storage tank (1) flows into the main filter (A) to be filtered by the main filter (A) and flows out from the main filter (A) to be supplied to the instrument (6) as the liquid filtered, and backwash liquid flowing out from the main filter (A) flows into the sub-filter (B) through the third pipe (47) and the second pipe (43) to be filtered by the sub-filter (B) and flows into the storage tank (1) as the backwash liquid filtered.

3. A filtration device (W2) that comprises a main filter (A) of a backwash type and a sub-filter (B) provided in parallel to the main filter (A), the filtration device (W2) **characterized by** comprising:
a first pipe (42) through which liquid in a storage tank (1) flows into the main filter (A), and the liquid filtered flows out from the main filter (A) to be supplied to an instrument (6);
a second pipe (43) through which the liquid in the storage tank (1) flows into the sub-filter (B), and the liquid filtered flows out from the sub-filter (B); and
a third pipe (47) through which backwash liquid flowed out from the main filter (A) flows into the sub-filter (B), **characterized in that**
the first pipe (42) is provided with a first valve (51) configured to control flow-in and flow-in stop of the liquid to the main filter (A),
the second pipe (43) is provided with a second valve (53) configured to control flow-in and flow-in stop of the liquid to the sub-filter (B), and a third valve (54) configured to control flow-out and flow-out stop of the liquid from the sub-filter (B),
a fourth pipe (48) through which the liquid filtered flowed out from the sub-filter (B) flows into the storage tank (1) is connected to a portion in the second pipe (43) between the sub-filter (B) and the third valve (54),
the third pipe (47) has one end portion connected to the main filter (A), and has another end portion connected to a portion in the second pipe (43) between the second valve (53) and the sub-filter (B),
the fourth pipe (48) is provided with a fourth valve (55) configured to control flow-in and flow-in stop of the liquid to the storage tank (1), and a flow rate control unit (100) configured to change a size of a flow path through which the liquid passes, based on a pressure difference between a pressure on side of the sub-filter (B) and a pressure on side of the storage tank (1),
during a normal filtration operation, with the first valve (51) and the fourth valve (55) open and the second valve (53) and the third valve (54) closed, the liquid in the storage tank (1) flows into the main filter (A) to be filtered by the main filter (A) and flows out from the main filter (A) to be supplied to the instrument (6) as the liquid filtered, and backwash liquid flowing out from the main filter (A) flows into the sub-filter (B) through the third pipe (47) and the second pipe (43) to be filtered by the sub-filter (B) and flows into the storage tank (1) as the backwash liquid filtered, and
the flow rate control unit (100) is configured to enlarge and widen the flow path as the pressure difference decreases, and narrow and downsize the flow path as the pressure difference increases.

4. The filtration device (W1, W2) according to any one of claims 1 to 3, **characterized in that** the flow rate control unit (100) is a constant flow rate valve including a spring (104, 105) configured to expand and contract based on the pressure difference, and a needle valve (102) configured to move in response to the expansion and the contraction of the spring (104, 105).

## Patentansprüche

1. Filtrationsvorrichtung (W1), die einen Hauptfilter (A) von einem Rückspültyp und einen parallel zu dem Hauptfilter (A) vorgesehenen Nebenfilter (B) umfasst, wobei die Filtrationsvorrichtung (W1) **dadurch gekennzeichnet ist, dass** sie umfasst:
ein erstes Rohr (42), durch das Flüssigkeit in einem Vorratstank (1) in den Hauptfilter (A) strömt und die gefilterte Flüssigkeit aus dem Hauptfilter (A) herausströmt, um einem Instrument (6) zugeführt zu werden;
ein zweites Rohr (43), durch das die Flüssigkeit in dem Vorratstank (1) in den Nebenfilter (B) strömt und die gefilterte Flüssigkeit aus dem Nebenfilter (B) herausströmt; und
ein drittes Rohr (47), durch das aus dem Hauptfilter (A) herausgeströmte Rückspülflüssigkeit in den Nebenfilter (B) strömt, **dadurch gekennzeichnet, dass**
der Nebenfilter (B) konfiguriert ist, die durch das dritte Rohr (47) einströmende Rückspülflüssigkeit zu filtern,
das dritte Rohr (47) mit einer Durchflussraten-Steuereinheit (100) versehen ist, die konfiguriert ist, eine Größe eines Strömungspfads, durch den die Flüssigkeit hindurchtritt, basierend auf einer Druckdifferenz zwischen einem Druck auf Seiten des Hauptfilters (A) und einem Druck auf Seiten des Nebenfilters (B) zu ändern, und
die Durchflussraten-Steuereinheit (100) konfiguriert ist, den Strömungspfad zu vergrößern und zu erweitern, wenn die Druckdifferenz abnimmt, und den Strömungspfad zu verengen und zu verkleinern, wenn die Druckdifferenz zunimmt.

2. Filtrationsvorrichtung (W1) nach Anspruch 1, **dadurch gekennzeichnet, dass**
das erste Rohr (42) mit einem ersten Ventil (51) versehen ist, das konfiguriert ist, das Einströmen und den Einströmstopp der Flüssigkeit zu dem Hauptfilter (A) zu steuern,
das zweite Rohr (43) mit einem zweiten Ventil (53), das konfiguriert ist, das Einströmen und den Einströmstopp der Flüssigkeit zu dem Nebenfilter (B) zu steuern, und einem dritten Ventil (54), das konfiguriert ist, das Herausströmen und den Herausströmstopp der Flüssigkeit aus dem Nebenfilter (B) zu steuern, versehen ist,
ein viertes Rohr (48), durch das die gefilterte und aus dem Nebenfilter (B) herausgeströmte Flüssigkeit in den Vorratstank (1) strömt, mit einem Abschnitt in dem zweiten Rohr (43) zwischen dem Nebenfilter (B) und dem dritten Ventil (54) verbunden ist,
das dritte Rohr (47) einen Endabschnitt aufweist, der mit dem Hauptfilter (A) verbunden ist, und einen anderen Endabschnitt aufweist, der mit einem Abschnitt in dem zweiten Rohr (43) zwischen dem zweiten Ventil (53) und dem Nebenfilter (B) verbunden ist,
das vierte Rohr (48) mit einem vierten Ventil (55) versehen ist, das konfiguriert ist, das Einströmen und den Einströmstopp der Flüssigkeit zu dem Vorratstank (1) zu steuern, und
während eines normalen Filtrationsbetriebs, wobei das erste Ventil (51) und das vierte Ventil (55) geöffnet sind und das zweite Ventil (53) und das dritte Ventil (54) geschlossen sind, die Flüssigkeit in dem Vorratstank (1) in den Hauptfilter (A) strömt, um von dem Hauptfilter (A) gefiltert zu werden, und aus dem Hauptfilter (A) herausströmt, um dem Instrument (6) als die gefilterte Flüssigkeit zugeführt zu werden, und aus dem Hauptfilter (A) herausströmende Rückspülflüssigkeit durch das dritte Rohr (47) und das zweite Rohr (43) in den Nebenfilter (B) strömt, um von dem Nebenfilter (B) gefiltert zu werden, und als die gefilterte Rückspülflüssigkeit in den Vorratstank (1) strömt.

3. Filtrationsvorrichtung (W2), die einen Hauptfilter (A) von einem Rückspültyp und einen parallel zu dem Hauptfilter (A) vorgesehenen Nebenfilter (B) umfasst, wobei die Filtrationsvorrichtung (W2) **dadurch gekennzeichnet ist, dass** sie umfasst:
ein erstes Rohr (42), durch das Flüssigkeit in einem Vorratstank (1) in den Hauptfilter (A) strömt und die gefilterte Flüssigkeit aus dem Hauptfilter (A) herausströmt, um einem Instrument (6) zugeführt zu werden;
ein zweites Rohr (43), durch das die Flüssigkeit in dem Vorratstank (1) in den Nebenfilter (B) strömt, und die gefilterte Flüssigkeit aus dem Nebenfilter (B) herausströmt; und
ein drittes Rohr (47), durch das aus dem Hauptfilter (A) herausgeströmte Rückspülflüssigkeit in den Nebenfilter (B) strömt, **dadurch gekennzeichnet, dass**
das erste Rohr (42) mit einem ersten Ventil (51) versehen ist, das konfiguriert ist, das Einströmen und den Einströmstopp der Flüssigkeit zu dem Hauptfilter (A) zu steuern,
das zweite Rohr (43) mit einem zweiten Ventil (53), das konfiguriert ist, das Einströmen und den Einströmstopp der Flüssigkeit zu dem Nebenfilter (B) zu steuern, und einem dritten Ventil (54), das konfiguriert ist, das Herausströmen und den Herausströmstopp der Flüssigkeit aus dem Nebenfilter (B) zu steuern, versehen ist,
ein viertes Rohr (48), durch das die gefilterte aus dem Nebenfilter (B) herausgeströmte Flüssigkeit in den Vorratstank (1) strömt, mit einem Abschnitt in dem zweiten Rohr (43) zwischen dem Nebenfilter (B) und dem dritten Ventil (54) verbunden ist,
das dritte Rohr (47) einen Endabschnitt aufweist, der mit dem Hauptfilter (A) verbunden ist, und einen anderen Endabschnitt aufweist, der mit einem Abschnitt in dem zweiten Rohr (43) zwischen dem zweiten Ventil (53) und dem Nebenfilter (B) verbunden ist,
das vierte Rohr (48) mit einem vierten Ventil (55), das konfiguriert ist, das Einströmen und den Einströmstopp der Flüssigkeit zu dem Vorratstank (1) zu steuern, und einer Durchflussraten-Steuereinheit (100), die konfiguriert ist, eine Größe eines Strömungspfads, durch den die Flüssigkeit hindurchtritt, basierend auf einer Druckdifferenz zwischen einem Druck auf Seiten des Nebenfilters (B) und einem Druck auf Seiten des Vorratstanks (1) zu ändern, versehen ist,
während eines normalen Filtrationsbetriebs, wobei das erste Ventil (51) und das vierte Ventil (55) geöffnet sind und das zweite Ventil (53) und das dritte Ventil (54) geschlossen sind, die Flüssigkeit in dem Vorratstank (1) in den Hauptfilter (A) strömt, um von dem Hauptfilter (A) gefiltert zu werden, und aus dem Hauptfilter (A) herausströmt, um dem Instrument (6) als die gefilterte Flüssigkeit zugeführt zu werden, und aus dem Hauptfilter (A) herausströmende Rückspülflüssigkeit durch das dritte Rohr (47) und das zweite Rohr (43) in den Nebenfilter (B) strömt, um von dem Nebenfilter (B) gefiltert zu werden, und als die gefilterte Rückspülflüssigkeit in den Vorratstank (1) strömt, und
die Durchflussraten-Steuereinheit (100) konfiguriert ist, den Strömungspfad zu vergrößern und zu erweitern, wenn die Druckdifferenz abnimmt, und den Strömungspfad zu verengen und zu verkleinern, wenn die Druckdifferenz zunimmt.

4. Filtrationsvorrichtung (W1, W2) nach einem der Ansprüche 1 bis 3, **dadurch gekennzeichnet, dass** die Durchflussraten-Steuereinheit (100) ein Ventil mit konstanter Durchflussrate ist, das eine Feder (104, 105), die konfiguriert ist, basierend auf der Druckdifferenz zu expandieren und zu kontrahieren, und ein Nadelventil (102), das konfiguriert ist, sich in Reaktion auf die Expansion und die Kontraktion der Feder (104, 105) zu bewegen, beinhaltet.

## Revendications

1. Dispositif de filtration (W1) qui comprend un filtre principal (A) de type à contre-lavage et un sous-filtre (B) prévu en parallèle au filtre principal (A), le dispositif de filtration (W1) étant **caractérisé en ce qu'**il comprend :
un premier tuyau (42) à travers lequel du liquide dans un réservoir de stockage (1) s'écoule dans le filtre principal (A), et le liquide filtré s'écoule hors du filtre principal (A) pour être fourni à un instrument (6) ;
un deuxième tuyau (43) à travers lequel le liquide dans le réservoir de stockage (1) s'écoule dans le sous-filtre (B) et le liquide filtré s'écoule hors du sous-filtre (B) ; et
un troisième tuyau (47) à travers lequel du liquide de contre-lavage ayant s'écoulé hors du filtre principal (A) s'écoule dans le sous-filtre (B), **caractérisé en ce que**
le sous-filtre (B) est configuré pour filtrer le liquide de contre-lavage s'écoulant à l'intérieur à travers le troisième tuyau (47),
le troisième tuyau (47) est pourvu d'une unité de commande de débit (100) configurée pour modifier une taille d'un trajet d'écoulement à travers lequel le liquide passe, sur la base d'une différence de pression entre une pression du côté du filtre principal (A) et une pression du côté du sous-filtre (B), et
l'unité de commande de débit (100) est configurée pour agrandir et élargir le trajet d'écoulement lorsque la différence de pression diminue, et rétrécir et réduire le trajet d'écoulement lorsque la différence de pression augmente.

2. Dispositif de filtration (W1) selon la revendication 1, **caractérisé en ce que**
le premier tuyau (42) est pourvu d'une première vanne (51) configurée pour commander l'entrée d'écoulement et l'arrêt d'entrée d'écoulement du liquide vers le filtre principal (A),
le deuxième tuyau (43) est pourvu d'une deuxième vanne (53) configurée pour commander l'entrée d'écoulement et l'arrêt d'entrée d'écoulement du liquide vers le sous-filtre (B), et d'une troisième vanne (54) configurée pour commander la sortie d'écoulement et l'arrêt de sortie d'écoulement du liquide depuis le sous-filtre (B),
un quatrième tuyau (48) à travers lequel le liquide filtré et ayant s'écoulé hors du sous-filtre (B) s'écoule dans le réservoir de stockage (1) est raccordé à une partie dans le deuxième tuyau (43) entre le sous-filtre (B) et la troisième vanne (54),
le troisième tuyau (47) présente une partie d'extrémité raccordée au filtre principal (A), et présente une autre partie d'extrémité raccordée à une partie dans le deuxième tuyau (43) entre la deuxième vanne (53) et le sous-filtre (B),
le quatrième tuyau (48) est pourvu d'une quatrième vanne (55) configurée pour commander l'entrée d'écoulement et l'arrêt d'entrée d'écoulement du liquide vers le réservoir de stockage (1), et
pendant une opération de filtration normale, avec la première vanne (51) et la quatrième vanne (55) ouvertes et la deuxième vanne (53) et la troisième vanne (54) fermées, le liquide dans le réservoir de stockage (1) s'écoule dans le filtre principal (A) pour être filtré par le filtre principal (A) et s'écoule hors du filtre principal (A) pour être fourni à l'instrument (6) en tant que liquide filtré, et du liquide de contre-lavage s'écoulant hors du filtre principal (A) s'écoule dans le sous-filtre (B) à travers le troisième tuyau (47) et le deuxième tuyau (43) pour être filtré par le sous-filtre (B) et s'écoule dans le réservoir de stockage (1) en tant que liquide de contre-lavage filtré.

3. Dispositif de filtration (W2) qui comprend un filtre principal (A) de type à contre-lavage et un sous-filtre (B) prévu en parallèle au filtre principal (A), le dispositif de filtration (W2) étant **caractérisé en ce qu'**il comprend :
un premier tuyau (42) à travers lequel du liquide dans un réservoir de stockage (1) s'écoule dans le filtre principal (A), et le liquide filtré s'écoule hors du filtre principal (A) pour être fourni à un instrument (6) ;
un deuxième tuyau (43) à travers lequel le liquide dans le réservoir de stockage (1) s'écoule dans le sous-filtre (B), et le liquide filtré s'écoule hors du sous-filtre (B) ; et
un troisième tuyau (47) à travers lequel du liquide de contre-lavage ayant s'écoulé hors du filtre principal (A) s'écoule dans le sous-filtre (B), **caractérisé en ce que**
le premier tuyau (42) est pourvu d'une première vanne (51) configurée pour commander l'entrée d'écoulement et l'arrêt d'entrée d'écoulement du liquide vers le filtre principal (A),
le deuxième tuyau (43) est pourvu d'une deuxième vanne (53) configurée pour commander l'entrée d'écoulement et l'arrêt d'entrée d'écoulement du liquide vers le sous-filtre (B), et d'une troisième vanne (54) configurée pour commander la sortie d'écoulement et l'arrêt de sortie d'écoulement du liquide depuis le sous-filtre (B),
un quatrième tuyau (48) à travers lequel le liquide filtré ayant s'écoulé hors du sous-filtre (B) s'écoule dans le réservoir de stockage (1) est raccordé à une partie dans le deuxième tuyau (43) entre le sous-filtre (B) et la troisième vanne (54),
le troisième tuyau (47) présente une partie d'extrémité raccordée au filtre principal (A), et présente une autre partie d'extrémité raccordée à une partie dans le deuxième tuyau (43) entre la deuxième vanne (53) et le sous-filtre (B),
le quatrième tuyau (48) est pourvu d'une quatrième vanne (55) configurée pour commander l'entrée d'écoulement et l'arrêt d'entrée d'écoulement du liquide vers le réservoir de stockage (1), et d'une unité de commande de débit (100) configurée pour modifier une taille d'un trajet d'écoulement à travers lequel le liquide passe, sur la base d'une différence de pression entre une pression du côté du sous-filtre (B) et une pression du côté du réservoir de stockage (1),
pendant une opération de filtration normale, avec la première vanne (51) et la quatrième vanne (55) ouvertes et la deuxième vanne (53) et la troisième vanne (54) fermées, le liquide dans le réservoir de stockage (1) s'écoule dans le filtre principal (A) pour être filtré par le filtre principal (A) et s'écoule hors du filtre principal (A) pour être fourni à l'instrument (6) en tant que liquide filtré, et du liquide de contre-lavage s'écoulant hors du filtre principal (A) s'écoule dans le sous-filtre (B) à travers le troisième tuyau (47) et le deuxième tuyau (43) pour être filtré par le sous-filtre (B) et s'écoule dans le réservoir de stockage (1) en tant que liquide de contre-lavage filtré, et
l'unité de commande de débit (100) est configurée pour agrandir et élargir le trajet d'écoulement lorsque la différence de pression diminue, et rétrécir et réduire le trajet d'écoulement lorsque la différence de pression augmente.

4. Dispositif de filtration (W1, W2) selon l'une quelconque des revendications 1 à 3, **caractérisé en ce que** l'unité de commande de débit (100) est une vanne à débit constant comprenant un ressort (104, 105) configuré pour se détendre et se contracter sur la base de la différence de pression, et une vanne à pointeau (102) configurée pour se déplacer en réponse à la détente et la contraction du ressort (104, 105).
